Europäisches Patentamt

European Patent Office

Office européen des brevets

(11) Veröffentlichungsnummer: **0 278 055 B1**

(19)

(12) **EUROPÄISCHE PATENTSCHRIFT**

(45) Veröffentlichungstag der Patentschrift: **20.05.92**

(21) Anmeldenummer: **87115424.1**

(22) Anmeldetag: **21.10.87**

(51) Int. Cl.⁵: $A21B\ 3/15$

(54) **Träger für Backwaren.**

(30) Priorität: **10.02.87 DE 8701983 U**
**03.07.87 DE 8709168 U**

(43) Veröffentlichungstag der Anmeldung:
**17.08.88 Patentblatt 88/33**

(45) Bekanntmachung des Hinweises auf die
Patenterteilung:
**20.05.92 Patentblatt 92/21**

(84) Benannte Vertragsstaaten:
**AT BE CH DE ES FR GB IT LI LU NL SE**

(56) Entgegenhaltungen:
**EP-A- 0 235 037**
**FR-A- 2 097 608**
**FR-A- 2 196 248**
**FR-A- 2 480 081**
**GB-A- 1 159 021**

(73) Patentinhaber: **Daub, Helmut**
**Mutschelbacher Strasse 30**
**W-7537 Remchingen-Wi.(DE)**

(72) Erfinder: **Daub, Helmut**
**Mutschelbacher Strasse 30**
**W-7537 Remchingen-Wi.(DE)**

(74) Vertreter: **Frank, Gerhard, Dipl.-Phys. et al**
**Patentanwälte Dr. F. Mayer & G. Frank Westli-**
**che 24**
**W-7530 Pforzheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Träger für Backwaren nach dem Oberbegriff des Patentanspruchs 1.

Ein derartiger Backwarenträger ist aus der FR-A2 480 081 bekannt. Der dort gezeigte Gärgutträger weist an zwei gegenüberliegenden Seiten eine randseitige Gestaltung auf, die es erlaubt, die gegenüberliegenden Seiten des Gewebetuches darüber zu legen und dort mit Klemmleisten zu fixieren.

Als Gewebebelag ist hierbei ein Glasfasergewebe vorgesehen, jedoch können für derartige Zwecke auch Polyesther-Gewebe eingesetzt werden (GB-A-1 159 021).

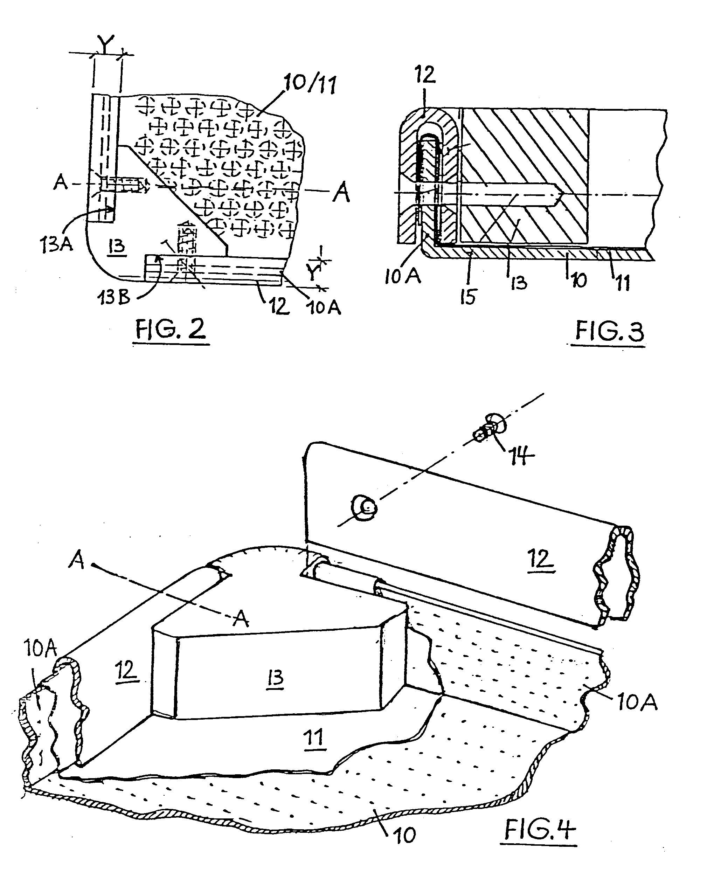

Bei dem zweiten Ausführungsbeispiel der Figur 3, bei einem planen metallischen Lochblech, von dem auch die Erfindung ausgeht, sind offenbar zusätzliche Rahmenteile an gegenüberliegenden Enden des planen Lochblechs vorgesehen, deren Ausgestaltung nicht eindeutig entnehmbar ist.

Durch die erfindungsgemäße Ausgestaltung wird ein Rahmen geschaffen, der durch die hochgezogenen Seitenteile eine hohe mechanische Stabilität aufweist und der durch die entfernbaren Eckstücke und U-Profilrahmen auch leicht zu zerlegen ist; dieses "Bausatzsystem" gewährleistet somit eine leichte Montage und Demontage des gesamten Trägers.

Weiterhin ist vorgesehen, daß die Eckstücke außen abgerundet sind und je einen Einschnitt zur Aufnahme der U-Profilrahmen aufweisen, dessen Tiefe mindestens etwa der Breite der U-Profilrahmen entspricht.

Dadurch wird ein weitgehend fugenloser, viertelkreisförmiger Übergang zwischen benachbarten U-Profilrahmen gebildet und durch die Abrundung der Eckstücke, insbesondere wenn diese aus Kunststoff gefertigt sind, ist eine Verletzungsgefahr ausgeschlossen, zumal auch die umlaufende Kante der Eckstücke entsprechend der Rundung der U-Profilrahmen ausgebildet sind.

Zur Fixierung dieser Bauteile gegeneinander sind die Seitenteile mit den jeweiligen Profilrahmen über Schrauben in Bohrungen der Eckstücke verschraubbar.

Durch einfaches Lösen von wenigen Schrauben lassen sich somit die vier Eckstücke entfernen, die U-Profilrahmen von den Seitenteilen abziehen und das Auflagetuch von der Unterlage abnehmen; eine Prozedur, die mit einem Minimum an Zeitaufwand bewerkstelligbar ist.

Ein Ausführungsbeispiel des erfindungsgemäßen Gärträgers wird anhand von Zeichnungen nun näher erläutert. Es zeigen:

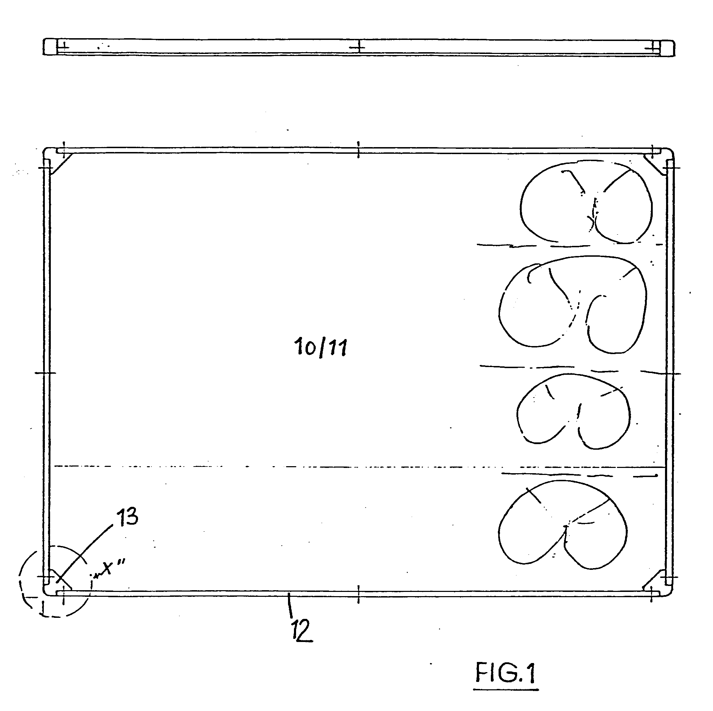

Figur 1:  Eine Aufsicht und eine Seitenansicht des Gärgutträgers,

Figur 2:  eine Aufsicht des Eckbereichs "X" der Figur 1 des Gärgutträgers,

Figur 3:  eine Schnittdarstellung in der Ebene A-A der Figur 2 und der Figur 4 des Eckbereichs und

Figur 4:  eine perspektivische Darstellung des Eckbereiches des Gärgutträgers, teilweise demontiert.

Der Gärgutträger besteht beim dargestellten Ausführungsbeispiel aus einem Lochblech 10, dessen Seitenteile 10A rechtwinklig nach oben geklappt sind, so daß ein Rahmen gebildet wird. Die hochgeklappten Seitenteile erstrecken sich bis zu den Ecken des Lochblechs 10, jedoch ist dort ein Zwischenraum zwischen benachbarten Seitenteilen gelassen. Auf dem Lochblech 10 ist eine Auflage, beispielsweise ein Gewebetuch aufgelegt, das so zugeschnitten ist, daß dessen Randbereiche über die Seitenteile 10A des Lochblechs 10 gelegt werden können.

Zur Fixierung des Gewebetuchs 11 an dessen Randbereichen, sind vier U-Profile 12 vorgesehen, deren Länge der Länge des jeweils zugehörigen Seitenteils 10A entspricht. Die lichte Weite dieser U-Profile 12 ist so bemessen, daß diese über die, über die Seitenteile 10A geschlagenen, Teile des Auflagetuches 11 gedrückt werden können und das Auflagetuch 11 somit in der einmal festgelegten Position fixieren. Es versteht sich von selbst, daß durch diese U-Profile 12 eine weitere Verbesserung der mechanischen Stabilität des Gärgutträgers erreicht wird.

Als weiteres Bauteil, das den Gärgutträger vervollständigt, sind insgesamt vier Eckstücke 13 vorgesehen, die so bemessen sind, daß deren Eckbereich den zwischen den hochgeklappten Seitenteilen 10A verbleibenden Zwischenraum durchsetzt und deren Eckbereich sowohl vertikal als auch horizontal abgerundet ist. Diese Eckstücke 13 dienen somit sowohl zur "Entschärfung" der Kantenbereiche in sicherheitstechnischer Hinsicht, als auch zur gegenseitigen Fixierung der oben beschriebenen Bauteile des Gärgutträgers: Hierzu sind in jedem Eckstück zwei senkrecht zueinander verlaufende Bohrungen 15 vorgesehen, die mit entsprechend vorbereiteten Bohrungen in den U-Profilrahmen 12 und den hochgeklappten Seitenteilen 10A des Lochblechs 10 fluchten, so daß durch insgesamt acht Schrauben 14 eine feste Verbindung zwischen Lochblech 10, U-Profilen 12 und Eckstücken 13 erreicht wird.

Das Lochblech 10 weist zweckmäßigerweise im Randbereich und den Seitenteilen 10A keine Lochung auf.

## Patentansprüche

1. Träger für Backwaren bestehend aus einer Unterlage aus einem planen, metallischen Lochblech mit zumindest teilweise senkrechten Seitenteilen und einem luftdurchlässigen Gewebebelag als Auflage, wobei zur randseitigen Halterung des Gewebebelags auf der Unterlage U-Profilrahmen vorgesehen sind, die den Gewebebelag einklemmen und fixieren, dadurch gekennzeichnet, daß das Lochblech plan ist und hochgezogene Seitenteile (10A) aufweist sowie Eckstücke (13), die mit dem Lochblech (10) und dessen Seitenteilen (10A) lösbar verbunden sind, daß der Gewebebelag (11) zumindest überwiegend aus Polyester besteht und die Gewebeöffnungen etwa 1 mm$^2$ betragen und insgesamt etwa 70% des Gewebebelags (11) ausmachen, daß der Gewebebelag sich über die hochgezogenen Seitenteile (10A) erstreckt, daß über die Seitenteile (10A) je einer der U-Profilrahmen (12) steckbar ist, und daß die Eckstücke (13) je eine Ausformung (13A,13B) zur Aufnahme der U-Profilrahmen (12) aufweisen.

2. Träger für Backwaren nach Anspruch 1, dadurch gekennzeichnet, daß die Eckstücke (13) außen abgerundet sind.

3. Träger für Backwaren nach Anspruch 1, dadurch gekennzeichnet, daß die Tiefe der Ausformungen (13A,13B) mindestens etwa der Breite (Y) der U-Profilrahmen (12) entspricht, so daß ein weitgehend fugenloser, viertelkreisförmiger Übergang zwischen benachbarten U-Profilrahmen (12) gebildet wird.

4. Träger für Backwaren nach Anspruch 1, dadurch gekennzeichnet, daß die Seitenteile (10A) mit den jeweiligen Profilrahmen (12) über Schrauben (14) in Bohrungen (15) der Ausformungen (13A,13B) festsetzbar sind.

5. Träger für Backwaren nach Anspruch 1, dadurch gekennzeichnet, daß die Eckstücke (13) aus Kunststoff oder Metall sind.

## Claims

1. Tray for bakery goods, including a base formed from a planar, metallic perforate sheet with at least partially upstanding lateral portions and an air-permeable material covering serving as an upper layer, U-shaped profile frames being provided for the retention, at its edges, of the material covering on the base, said frames clamping and securing the material covering in position, characterised in that the perforate sheet is planar and has raised lateral portions (10A) and corner pieces (13), which are detachably connected to the perforate sheet (10) and its lateral portions (10A), in that the material covering (11) is formed at least predominantly from polyester, and the perforations in the material are each approximately 1 mm$^2$ and constitute altogether approximately 70 % of the material covering (11), in that the material covering extends over the raised lateral portions (10A), in that each of the U-shaped profile frames (12) is mountable over the respective lateral portions (10A), and in that the corner pieces (13) each have a recess (13A, 13B) for the accommodation of the U-shaped profile frames (12).

2. Tray for bakery goods according to claim 1, characterised in that the corner pieces (13) are rounded externally.

3. Tray for bakery goods according to claim 1, characterised in that the depth of the recesses (13A, 13B) corresponds at least approximately to the width (Y) of the U-shaped profile frames (12), so that a largely seamless, quadrantal transition is formed between adjacent U-shaped profile frames (12).

4. Tray for bakery goods according to claim 1, characterised in that the lateral portions (10A) are securable with the respective profile frames (12) in bores (15) in the recesses (13A, 13B) by means of screws (14).

5. Tray for bakery goods according to claim 1, characterised in that the corner pieces (13) are formed from plastics material or metal.

## Revendications

1. Support pour produits cuits au four, comprenant une base constituée d'une tôle perforée métallique plane avec des côtés au moins partiellement verticaux et un revêtement textile comme surface d'appui, des cadres profilés en U qui enserrent et fixent le revêtement textile étant prévus sur la base pour le maintien latéral du revêtement textile, **caractérisé en ce** que la tôle perforée est plane et comporte des côtés (10A) relevés ainsi que des pièces d'angle (13) raccordées de manière amovible à la tôle perforée (10) et aux côtés (10A) de celle-ci, que le revêtement textile (11) est réalisé au moins en majeure partie en polyester et que les ouvertures du tissu sont d'environ 1 mm$^2$ et représentent au

total environ 70 % du revêtement textile (11), que le revêtement textile s'étend par dessus les côtés (10A) relevés, que respectivement l'un des cadres profilés en U (12) peut être emboîté sur les côtés (10A), et que les pièces d'angle (13) comportent à chaque fois une découpe (13A, 13B) pour la réception des cadres profilés (12).

2. Support pour produits cuits au four selon la revendication 1, caractérisé en ce que les pièces d'angles (13) sont arrondies à l'extérieur.

3. Support pour produits cuits au four selon la revendication 1, caractérisé en ce que la profondeur des découpes (13A, 13B) correspond au moins à la largeur (Y) des cadres profilés en U (12) de manière à former une transition en quart de cercle et dans une large mesure sans joint entre des cadres profilés en U (12) voisins.

4. Support pour produits cuits au four selon la revendication 1, caractérisé en ce que les côtés (10A) peuvent être immobilisés avec les cadres profilés (12) respectifs par l'intermédiaire de vis (14) dans des alésages (15) des découpes (13A, 13B).

5. Support pour produits cuits au four selon la revendication 1, caractérisé en ce que les pièces d'angle (13) sont réalisées en matière plastique ou en métal.

10/11

13

"x"

12

FIG.1

Y

10/11

A — — A

13A

13

13B

12    10A

**FIG. 2**

12

10A

15    13    10    11

**FIG.3**

14

A

A

10A

12

13

11

10A

12

10

**FIG.4**